# EUROPEAN PATENT SPECIFICATION

(11) **EP 1 234 427 B1**
(45) Date of publication and mention of the grant of the patent: **01.09.2004**
(21) Application number: 00976210.5
(22) Date of filing: 08.11.2000
(51) Int. Cl.: H04L 29/06, H04N 7/15, H04L 12/18

(54) **A METHOD FOR CONTROLLING SEVERAL MULTIPOINT CONTROL UNITS AS ONE MULTIPOINT CONTROL UNIT**
VERFAHREN ZUR STEURUNG VON MEHREREN MEHRPUNKTSTEUERUNGSEINHEITEN ALS EINE MEHRPUNKTSTEUERUNGSEINHEIT
PROCEDE PERMETTANT DE COMMANDER PLUSIEURS UNITES DE COMMANDE MULTIPOINT COMME UNE UNITE DE COMMANDE MULTIPOINT

(30) Priority: 08.11.1999 US 164298 P
(43) Date of publication of application: 28.08.2002
(73) Proprietor: Polycom Israel Ltd., 49130 Petach Tikva (IL)
(72) Inventor: EVEN, Roni, 64953 Tel Aviv (IL); GAVISH, Sigmund, Tel Aviv (IL); YAD-SHALOM, Itay, Tel Aviv (IL)
(74) Representative: Käck, Jürgen, Dipl.-Ing.
(86) International application number: PCT/IB2000/001764
(87) International publication number: WO 2001/035655

(56) References cited:
- EP-A- 0 794 645
- EP-A- 0 817 484
- TOGA J ET AL: "ITU-T STANDARDIZATION ACTIVITIES FOR INTERACTIVE MULTIMEDIA COMMUNICATIONS ON PACKET-BASED NETWORKS: H.323 AND RELATED RECOMMENDATIONS" COMPUTER NETWORKS AND ISDN SYSTEMS,NORTH HOLLAND PUBLISHING. AMSTERDAM,NL, vol. 31, no. 3, 11 February 1999 (1999-02-11), pages 205-223, XP000700319 ISSN: 0169-7552

## Description

### TECHNICAL FIELD

This invention relates generally to multimedia communication, and more specifically, to a system and method for controlling multiple multimedia communication systems from a single control point.

### BACKGROUND OF THE INVENTION

As the geographical domain in which companies conduct business continues to expand, video teleconferencing technology attempts to bring the world closer together. However, to fully satisfy the requirement of having a face to face meeting, it is necessary for the video conferencing technology to provide real-time, multipoint conferencing that is a pleasure to utilize. However, in multipoint video conferencing, one main obstacle is the inefficiency of scheduling conferences.

In the current market, most multipoint video calls are scheduled in advance through companies that own Multipoint Control Units (MCUs). An MCU provides the capability for three or more terminals and gateways to participate in a multipoint conference. If a company owns more than one MCU, it has more flexibility in hosting video conferences. However, each MCU must be operated independently from the other MCUs in setting up and controlling video conferences. Additionally, the capacity of each MCU is limited to video conferences controlled by that MCU. The resources of the multiple MCUs cannot be combined to promote more efficient scheduling.

Each MCU is able to communicate with multiple conference participants. In an exemplary system, the MCU has ten participant slots, and thus can support ten users. The MCU may be configured so that more than one conference is going on at one time. For instance, a four participant conference and a five participant conference can be simultaneously supported on an MCU with a capacity of ten participants. Due to inefficient scheduling, many MCUs have extra capacity that cannot be used. In the example above, the MCU has capacity for ten participants but only nine participants are scheduled for conferences.

One reason why most multipoint video calls are scheduled in advance is that there is a low probability of successfully finding an open MCU quickly without prior scheduling. This probability is low largely because a conference scheduler must contact each MCU separately to attempt to initiate a video conference. If a large number of MCUs could be contacted simultaneously, the probability of finding an available MCU quickly and initiating an unscheduled video conference would be greatly increased. Additionally, if an MCU could share its excess capacity with another MCU, more conferences could be accommodated. The availability of this feature would facilitate escaping the bonds of scheduled video conferences and allowing impromptu video conferences to abound.

Therefore, it is evident that there is a need in the art for a system and method for operating multiple MCUs from a single control point. This will reduce the burden on any single MCU and allow greater ease in initiating a video conference.

Therefore, it is also evident that there is a need in the art for a system and method for operating multiple MCUs from a single control point to schedule conferences on multiple MCUs in such a way as to minimize the number of unused participant slots on each MCU.

Therefore, it is also evident that there is a need in the art for a system and method for operating multiple MCUs from a single control point in a manner that will allow video conference initiation without the need for prior scheduling.

EP 0 794 645 A2 discloses a multimedia multipoint communication reservation system in which multimedia users are connected to a multimedia multipoint telecommunications server (MCU). A request for communication capacity is communicated to a reservation controller which is assigned to the MCU to which the user is connected to. Depending on the capacity of user's MCU the reservation request is assigned or rescheduled.

It is an object of the invention, to provide a method, a system and a central control unit for multimedia communication which has an improved flexibility of allocating communication interconnections for multimedia communication.

A central control unit of the invention is defined in claim 14, a system in claim 25 and a method in claim 1.

Particular embodiments of the invention are set out in the dependent claims.

The present invention provides a single, apparatus that is capable of controlling a plurality of multipoint control units. This promotes efficient use of all of the MCUs because they are controlled and scheduled from a single point. Additionally, by combining the MCUs and controlling them from a single point, the probability of successfully scheduling an impromptu video conference is greatly increased.

In particular, the MCUs are interconnected to a common controlling Virtual MCU (VMCU). This VMCU controls all of the connected MCUs and is used to schedule and coordinate video conferences on all of these MCUs. The VMCU can be a separate unit or one of the MCUs.

In an exemplary embodiment of the present invention, the VMCU is able to identify reservation factors for each conference to be scheduled. The reservation factors may include, but are not limited to, start time, duration of the conference, number of participants, protocol type, bit rate, and terminal type.

In an exemplary embodiment of the present invention, the VMCU is able to identify capability factors for each of the multimedia terminals and each of the corresponding MCUs. The capability factors for the multimedia terminals include, but are not limited to, the type of terminal, the supported Codecs, and the speed of the terminal. The capability factors for the corresponding MCUs include, but are not limited to, the number of participants that can be included in conferences, the terminal types that can be supported and the speed of the MCU, the number of free audio bridges, the number of free Codecs, and the number of free video mixers. The number of free audio bridges and free video mixers refer to remaining capacity that each MCU has with respect to audio and video capabilities. Each MCU can either initiate or receive a call. The MCUs are responsive to a command from a multimedia terminal to initiate a multimedia communication between at least two of the multimedia terminals.

The VMCU can compare the capability factors for each of the multimedia terminals to the capability factors of the corresponding MCUs connected to the VMCU to determine an optimum assignment of resources for a video conference. The VMCU will be alerted when the time to start the conference has arrived. Upon being alerted that the time to start the conference has arrived, the VMCU rechecks the resources of the MCUs, compares them to the needs of the conference. The VMCU may change the assigned MCU at the last minute before the conference starts. The VMCU may either direct communication between the terminals and the MCU throughout a conference, or it can transfer the terminal to the MCU and allow the terminal and the MCU to communicate without interaction through the VMCU.

Other objects, features, and advantages of the present invention will become apparent upon reading the following detailed description of the embodiments of the invention, when taken in conjunction with the accompanying drawings and appended claims.

### BRIEF DESCRIPTION OF THE DRAWINGS

Fig. 1 is a system diagram that illustrates an exemplary environment suitable for implementing various embodiments of the present invention.
Fig. 2 is a block diagram of the VMCU.
Fig. 3 is a flow diagram illustrating the steps involved in an exemplary embodiment of the present invention during the conference reservation phase.
Fig. 4 is a flow diagram illustrating the steps involved in an exemplary embodiment of the present invention during the conference start phase.
Fig. 5 is a flow diagram illustrating the steps involved in an exemplary embodiment of the present invention during the forwarding of a dial-in call from an H.320 terminal.
Fig. 6 is a flow diagram illustrating the steps involved in an exemplary embodiment of the present invention in response to a conference initiation from an H.321 terminal.
Fig. 7 is a flow diagram illustrating the steps involved in an exemplary embodiment of the present invention in response to a conference initiation from an H.323 terminal.

### DETAILED DESCRIPTION

Referring now to the drawings, in which like numerals refer to like parts throughout the several views, exemplary embodiments of the present invention are described.

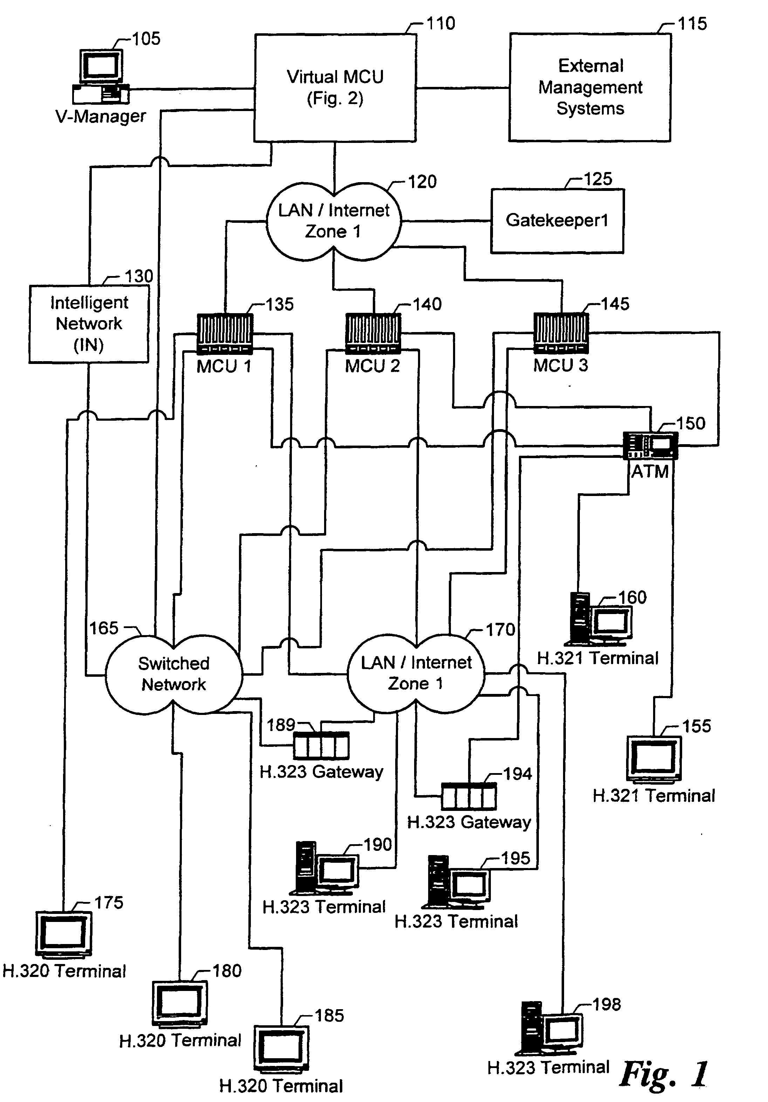

Fig. 1 is a system diagram that illustrates an exemplary environment suitable for implementing various embodiments of the present invention. The system is controlled by a Virtual MCU (VMCU) (**110**) and may include one or more MCUs (**135, 140, 145**). Although three MCUs are illustrated, the present invention is not limited to a particular number of MCUs and the presented configuration is intended to be illustrative of an exemplary configuration. In an exemplary embodiment of the present invention, the VMCU (**110**) is implemented with an internal router unit, which is a part of the conference manager (**250**), for routing the conference participants to an MCU (**135,140, 145**). In alternative embodiments of the present invention, the VMCU (**110**) may be implemented with an MCU or any hardware or software component capable of implementing the VMCU (**110**) functionality. An operator may control the VMCU (**110**) through a V-Manager (**105**). The V-Manager (**105**) may be any user operated computing device, such as a PC, Macintosh, mainframe computer, hand held devices such as a PALM® or Windows CE device, UNIX machine, or other similar device. In an exemplary embodiment, the VMCU (**110**) is coupled to each of the MCUs (**135, 140, 145**) through a TCP/IP connection. However, other communication connections may be used in alternative embodiments. The connection between the VMCU and the various MCUs may be an Intranet or Internet connection. The MCUs (**135,140,145**) may be co-located or geographically dispersed. In an exemplary system, each MCU (**135, 140,145**) supports connections with various types of terminals including, but not limited to H.321 **(155,160),** H.323 **(190, 195, 198)** and H.320 (**175, 180, 185**) terminals. The connections to the terminals are illustrated as network clouds (**165, 170**). Those skilled in the art will appreciate that other terminal protocols could be used in alternative embodiments.

H.323 is a packet-based multimedia communications protocol. More information about communication protocols can be found at the International Telecommunication Union (ITU) web site: http://www.itu.int. An H.323 terminal provides for real-time, two-way communications with another H.323 terminal (**190, 195, 198**), or an MCU (**135, 140, 145**). H.323 terminals support the communication of control, status, audio, moving color video pictures, and/or data. Depending on the scenario, an H.323 terminal (**190,195, 198**) may provide speech only, speech and data, speech and video, or speech, data and video.

H.320 is a communication protocol that uses narrowband visual telephone systems and terminal equipment. An H.321 terminal (**155, 160**) is an adaptation of an H.320 visual telephone terminals to a B-ISDN environment. The VMCU (**110**) can support various types of connectivity. Fig. 1 illustrates connecting through a switched network (**165**), an Intelligent Network (IN) (**130**), an Asynchronous Transfer Mode (ATM) network (**150**) and/or a LAN/Internet (**120,170**) networks **120** and **170** can be the same network. Network **120/170** may be connected via a gateway (**189**) to a switched network (**165**) and may be connected via a gateway (**194**) to an ATM network (**150**). Those skilled in the art will appreciate that the VMCU (**110**) may be connected to an MCU (**135,140,145**) through the aforementioned methods or any other connection that supports the transmission requirements of the MCUs.

A circuit switched network or switched network is a network in which a physical path is obtained for and dedicated to a single connection between two endpoints in the network for the duration of the connection. Endpoints include all network elements that can generate or terminate information streams. In an exemplary embodiment of the present invention, endpoints include, but are not limited to, telephones, terminals, gateways, MCUs, and VMCUs. Ordinary telephone service is circuit-switched.

An IN (**130**) is a telephone network architecture originated by Bell Communications Research in which the service logic for a call is located separately from the switching facilities, allowing services to be added or changed without having to redesign switching equipment.

In an exemplary embodiment of the present invention, the VMCU (**110**) system supports a TCP connection to the MCUs (**135, 140, 145**). It may include an Integrated Services Digital Network (ISDN) Primary Rate Interface (PRI) module and another LAN (**120, 170**) connection to the IN **(130).**

In an exemplary embodiment of the present invention, the VMCU (**110**) communicates over a LAN/Internet (**120, 170**), through a gatekeeper (**125**). The gatekeeper (**125**) is an H.323 entity on the network that provides address translation and controls access to the network for H.323 terminals (**190,195,198**), H.323 Gateways (**189,194**) and MCUs (**135,140,145**). The Gatekeeper (b) may also provide other services to the terminals, Gateways, and MCUs such as bandwidth management and address resolution for Gateways.

An H.323 Gateway (**189, 194**) provides for real-time, two-way communications between H.323 Terminals (**190,195,198**) on the packet-based network, other Terminals on a switched circuit network (**165**), or to another H.323 Gateway (**189, 194**). Other Terminals include those complying with ITU recommendations, such as H.310 (H.320 on B-ISDN), H.320 (ISDN), H.321 (ATM), H.322 (GQOS-LAN), H.324 (GSTN), H.324M (Mobile), and V.70 (DSVD).

The VMCU (**110**) may either control all of the VMCU (**110**) functions described herein, or it may use an external management system (**115**) to control various functions of the VMCU (**110**). In an exemplary embodiment of the present invention, an external management system (**115**) may be used to operate the reservation system associated with the VMCU (**110**).

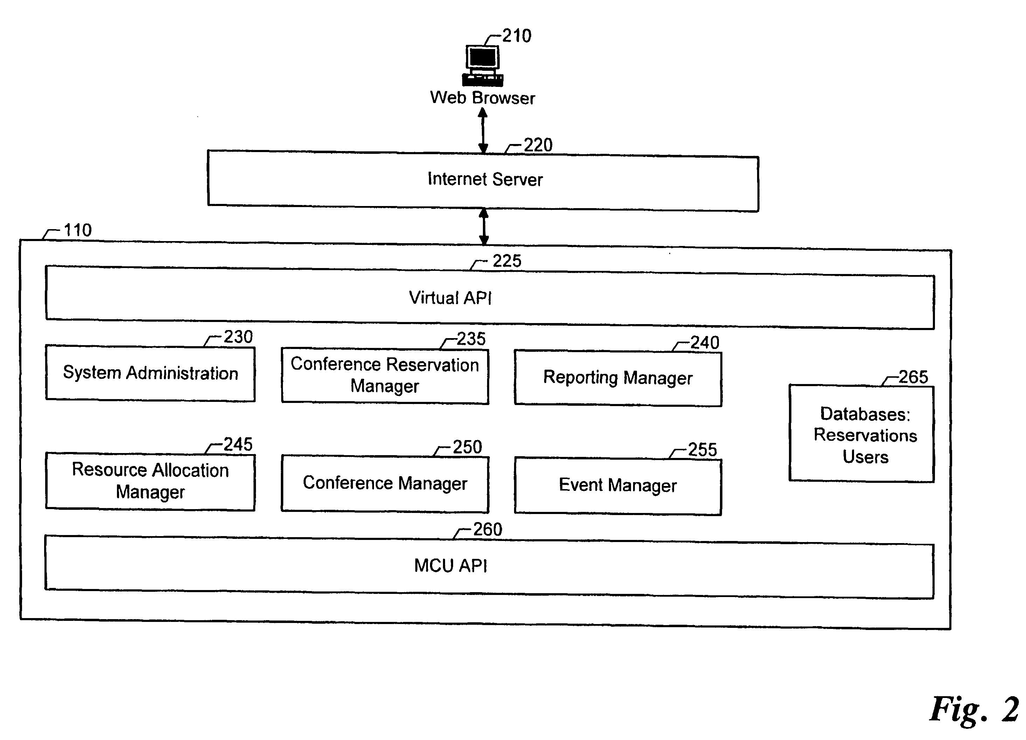

Fig. 2 is a block diagram of the VMCU (**110**). The VMCU (**110**) is a platform independent system solution for controlling one or more MCUs (**135,140,145**). The VMCU may be one of the MCUs (**135, 140, 145**). In an exemplary embodiment of the present invention, the VMCU (**110**) includes several modules that use a shared database (**265**). The modules include, but are not limited to, the conference reservation manager (**235**), the conference manager (**250**), the resource allocation manager (**245**), the event manager (**255**), the reports manager (**240**), the system administrator tool (**230**), and the VMCU databases (**265**).

The Conference Reservation Manager (**235**) accepts requests for visual session reservations and uses the reservation parameters to verify that it can be accepted. The Conference Reservation Manager (**235**) then stores the reservation record in the database (**265**). If the session has to start immediately, the Conference Reservation Manager (**235**) passes the information to the Conference Manager (**250**).

The Conference Manager (**250**) starts a session when the session's time to start arrives. The Conference Manager (**250**) loads the session onto the target MCU via the MCU API (**260**) and gets status information from all of the MCUs concerning ongoing sessions. The Conference Manager (**250**) can accept requests for dial-in conferences and route the requests to the correct MCU or accept Intelligent Network (IN) requests for routing information. The Conference Manager (**250**) may route H.323 calls by forwarding H.225 and H.245 messages to the selected MCU or gatekeeper or by serving as a termination point for a call.

The Resource Allocation Manager (**245**) keeps the information concerning the MCUs' resources, i.e. audio bridges, video mixers, etc., and allocates the resources to conferences. The Resource Allocation Manager (**245**) also calculates resource availability for future reservations.

The Event Manager (**255**) receives messages, such as call start, call terminate, etc, for the different MCUs and stores the messages in a database (**265**).

The Reporting Manager (**240**) builds reports. The reports may include, but are not limited to, length of time resources were used, which resources were used for a specific session, and percentage of resources used during a specified time period. The reports are built upon the receipt of a report request from the Internet server (**220**).

The System Administrator (**230**) serves as an input tool for VMCU parameters. The VMCU parameter may include, but are not limited to, the number of MCUs controlled by the VMCU, the MCU addresses, and the MCUs' resources.

In an exemplary embodiment of the present invention, the VMCU databases (**265**) include databases for reservations, users, and any other data required for the operation of the VMCU (**110**). Database (**265**) can be an external Database including, but not limited to, a Database using LDAP or ILS. A virtual API (**225**) enables clients to do one or more of the following tasks: reserve conferences, start an impromptu conference, control on going conferences, and receive usage information. The aforementioned tasks may be completed from a standard web browser (**210**). The browser (**210**) interacts with an Internet server (**220**) that uses the virtual API (**225**).

In an exemplary embodiment of the present invention, the VMCU (**110**) offers users a web based tool enabling a user leading a conference to connect to the VMCU (**110**) and monitor and control the conference remotely. The VMCU (**110**) works as a proxy for the user by getting the information and sending controls to the actual MCU (**135, 140,145**) supporting the conference. The end user does not have to know which MCU (**135,140,145**) is supporting the conference.

In an exemplary embodiment of the present invention, a VMCU (**110**) communicates with MCUs (**135, 140, 145**) through an MCU application program interface (MCU API) (**260**).

An exemplary embodiment of the present invention can operate within a four-phased video conference system. The four phases include: Configuration, Conference reservation, Conference scheduling, and Conference Control.

During the configuration phase, an operator enters configuration information for the MCUs (**135, 140, 145**) into the VMCU (**110**). Completing the configuration enables the VMCU (**110**) to verify and allocate resources for the conference during the reservation and scheduling phases.

The Conference reservation, Conference scheduling, and Conference Control phases will be discussed in conjunction with the following figures.

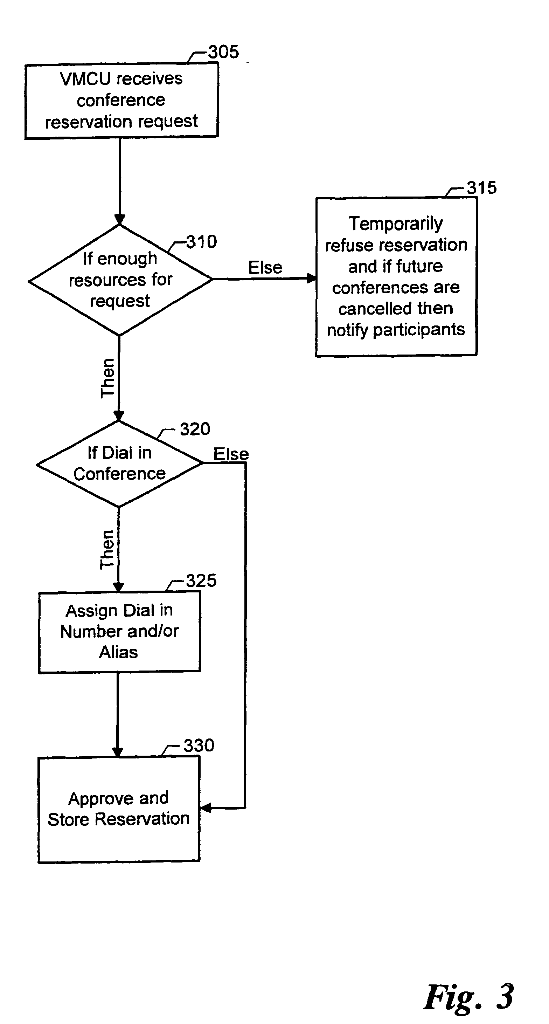

Fig. 3 is a flow diagram illustrating the steps involved in an exemplary embodiment of the present invention during the conference reservation phase. The conference reservation phase is entered when a user wishes to reserve a conference. In an exemplary embodiment of the present invention, the conference may include H.320, H.323, and H.321 terminals. Initially, the VMCU (**110**) receives a conference reservation request (**305**). The conference reservation request includes information to allow the VMCU (**110**) to determine whether the resources necessary to support the requested conference are available (**310**). The resources necessary for the conference include the availability of MCU support for each conference participant. Each MCU supporting the conference must be able to communicate with the terminal to be supported by that MCU during the video conference. If there are insufficient resources available to support the requested conference, the reservation is temporarily suspended. If additional resources are obtained subsequent to the temporary suspension (i.e. another conference is canceled), then the VMCU (**110**) may notify the participants that the conference can now be scheduled (**315**).

In an exemplary embodiment of the present invention, the VMCU (**110**) is able to identify reservation factors for each conference to be scheduled. The reservation factors may include, but are not limited to, start time, duration of the conference, number of participants, protocol type, bit rate, and terminal type.

In an exemplary embodiment of the present invention, the VMCU (**110**) is able to identify capability factors for each of the multimedia terminals (**155, 160, 175, 180, 185,190, 195,198**) and each of the corresponding MCUs (**135, 140,145**). The capability factors for the multimedia terminals (**155, 160, 175, 180, 185, 190, 195,198**) include the type of terminal, codec type, and the speed of the terminal. The capability factors for the corresponding MCUs (**135, 140, 145**) include the number of participants that can be included in conferences, the terminal types that can be supported and the speed of the MCU (**135, 140, 145**), the number of free audio bridges, and the number of free video mixers. The number of free audio bridges and free video mixers refer to remaining capacity that each MCU (**135, 140, 145**) has with respect to audio and video capabilities. Each MCU (**135, 140, 145**) can either initiate or receive a call. The MCUs (**135, 140, 145**) are responsive to a command from a multimedia terminal to initiate a multimedia communication between at least two of the multimedia terminals (**155, 160, 175, 180, 185, 190, 195, 198**).

If the Conference Reservation Manager (**235**) of the VMCU (**110**) determines that there are enough resources available to host the conference (**310**), processing then continues at step **320.** At step **320,** the VMCU (**110**) determines how the participants will connect to the conference when it is time to start the conference. There are several conference connection options including: dial-in, dial-out, and network connection. In the dial-in connection option, the participants dial an assigned number associated with the MCU (**135, 140, 145**) assigned to host the conference and/or a conference Alias. In the dial-out connection option, the MCU (**135, 140, 145**) assigned to host the conference dials each of the participants. In the network connection option, both the participants and the MCU (**135, 140,145**) are connected to a network and they communicate through that network. The network can be any type of network including LAN, Internet, Intranet, or other networks. The conference can also be initiated by all parties contacting the VMCU (**110**) and the VMCU (**110**) will handle communications.

At step **320,** if the conference is a dial-out conference, the VMCU **(110)** records the telephone number of the participant so that the assigned MCU (**135, 140, 145**) can initiate a call to the participant at the scheduled start time for the conference. Alternatively, the VMCU (**110**) can initiate a call to each participant and control the communication between the assigned MCU (**135, 140, 145**) and the participants. If the conference is a dial-in conference type (**320**), the VMCU (**110**) assigns a dial-in number to the participant (**325**) and notifies the participant of the assigned number. This dial-in number is usually the dial-in number for the MCU (**135, 140, 145**) reserved for the conference. Alternatively, the VMCU (**110**) may assign a number to dial-in to the VMCU (**110**), or a different MCU (**135, 140, 145**), and then forward the call to the correct MCU (**135, 140, 145**) when the conference starts. H.320 terminals (**175, 180, 185**) will use this number to dial into the assigned MCU (**135,140,145**). Additionally, the conference may be scheduled over an Integrated Services Digital Network (ISDN) line or over a computer network. In these cases, the participants will connect to the conference over the ISDN lines. The ISDN number will point to one of the preferred MCU's (**135, 140, 145**) for the conference. It may optionally be a special number in cases where the system supports IN (**130**) connectivity. The number will be used as an E.164 alias by the H.323 terminals (**190,195,198**) to call through a gatekeeper (**125**). The ISDN number will be translated to the correct ATM (**150**) number during call setup in an H.321 terminal (**155, 160**).

After the VMCU (**110**) has determined that there are sufficient resources available to host the conference and the reservation has been approved, the VMCU (**110**) stores the reservation date, reservation time, participant names, dial-in numbers, the MCU(s) (**135, 140, 145**) assigned, and any other applicable information into a reservation database (**330**) (**265**). This reservation database (**265**) is available to the VMCU (**110**) to set-up the conference when the start time arrives. The reservation database may also be accessed if the VMCU (**110**) needs to change the information, such as assigning a different MCU (**135, 140, 145**) in order to create a more efficient schedule. Such a modification to the reservation database may be necessary when multiple conferences can be combined on MCUs (**135,140,145**) to minimize the number of unused participant slots during a conference. For instance, if a six participant conference is scheduled on an MCU (**135, 140, 145**) with ten participant slots and a four participant conference is scheduled on a different MCU (**135,140,145**), then these two conferences can be moved to a single MCU (**135,140,145**) with ten participant slots and all of the participant slots will be used. Thus this aspect of the present invention optimizes the efficiency in the use and scheduling of conference resources.

Additionally, the VMCU (**110**) may be configured to allow a single conference to be initiated across multiple MCUs (**135, 140, 145**). When the VMCU (**110**) operates in this manner, not all participants will be connected to the same MCU (**135, 140, 145**), but they will all be able to communicate with each other as the various MCUs (**135,140,145**) are cascaded by the VMCU (**110**). This aspect of the present invention allows a greater number of participant slots on each MCU (**135, 140, 145**) to be scheduled. This aspect further allows for the support of large conferences that include more participants than a single MCU (**135,140,145**) can accommodate. More particularly, this aspect of the present invention allows the VMCU (**110**) to operate as a single MCU (**135,140,145**) that is as large as the sum of all of the available participant slots on all of the connected MCUs (**135, 140, 145**). Typically, this aspect of the present invention is only used after conferences have been efficiently combined on the available MCUs (**135,140, 145**) and the remaining capacity of the MCUs (**135, 140, 145**) is insufficient to support an additional conference.

When the VMCU (**110**) receives multiple conference requests, the VMCU (**110**) determines how to assign the conferences to the available MCUs (**135,140,145**). For instance, the VMCU (**110**) receives three conference requests for conferences requiring resources for conferences of sizes A, B, and C, where A, B, and C represent the number of participant slots needed by each conference. If two MCUs are available and the two MCUs have X participant slots, and if A plus B is greater than X, and B plus C is less than or equal to X, then the VMCU (**110**) assigns the conference of size A to a first MCU and the conferences of sizes B and C to a second MCU. If two MCUs are available and the two MCUs have X participant slots, and if A plus B is greater than X, A plus C is greater than X, and B plus C is greater than X, then the VMCU (**110**) assigns the conference of size. A to a first MCU the conferences of size B to a second MCU and assigns the conference of size C to a VMCU (**110**), wherein the VMCU (**110**) controls the remaining participant slots on the first and second MCUs as an additional MCU.

In an exemplary embodiment of the present invention, the VMCU (**110**) first optimizes the conference scheduling by combining conferences together onto a single MCU (**135, 140, 145**). After the MCUs (**135, 140, 145**) are scheduled as fully as possible, the VMCU (**110**) schedules the remaining MCU resources to conference participants as if the remaining resources comprised an additional MCU (**135,140,145**). These remaining resources are then cascaded by the VMCU (**110**).

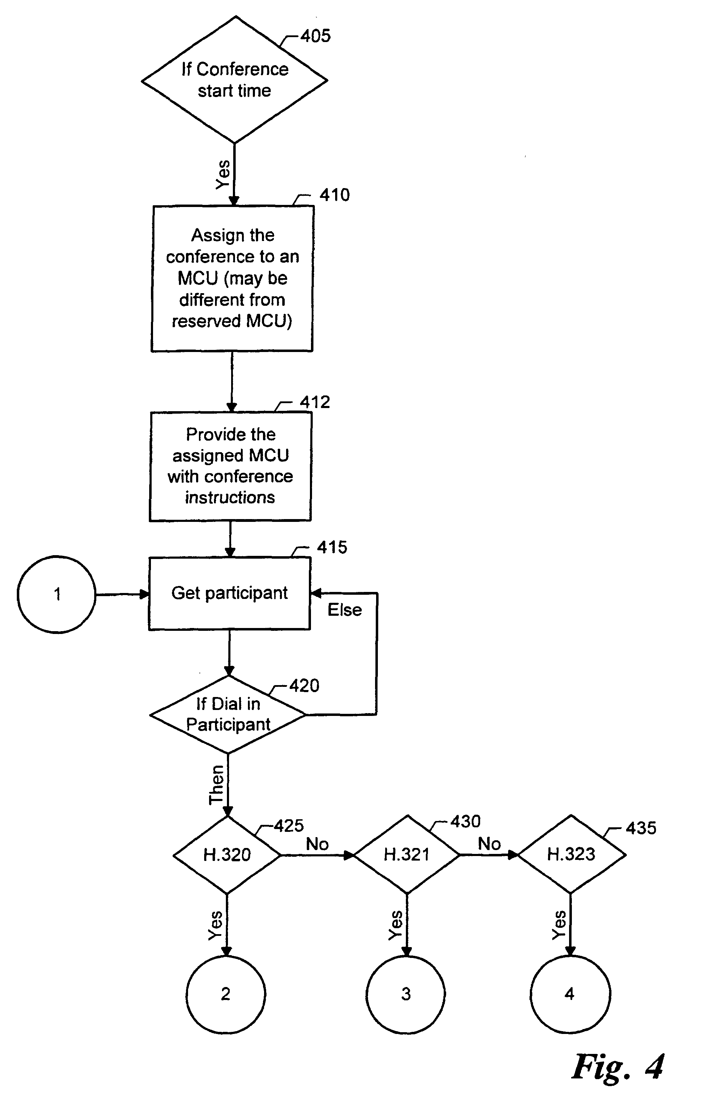

Fig. 4 is a flow diagram illustrating the steps involved in an exemplary embodiment of the present invention during the conference start phase. Initially, the Conference Manager (**250**) of the VMCU (**110**) is alerted when the time to start the reserved conference has arrived (**405**). The VMCU (**110**) will next assign the conference to an MCU by selecting an MCU (**135, 140, 145**) that has sufficient resources to run the conference (**410**). The selected MCU may be the same MCU that was reserved for the conference or it can be a different MCU. After the VMCU (**110**) selects an MCU to run the conference, the VMCU (**110**) provides the MCU with the necessary instructions to run the conference (**412**). These instructions include information concerning how each participant will connect to the conference and any other information necessary for the MCU to run the conference.

If the conference is a dial-in conference, the VMCU (**110**) then either signals the MCU (**135, 140, 145**) corresponding to the dial-in number assigned to the conference to accept the conference, or the VMCU (**110**) provides the MCU (**135, 140, 145**) with a number to forward the call to if the VMCU (**110**) decides to run the conference on another MCU (**135, 140,145**). If the conference is a dial-out conference, the VMCU (**110**) will notify the assigned MCU (**135,140,145**) which numbers it should dial to contact the desired participants. If the conference is a dial-in conference and the conference has been moved to a different MCU (**135, 140,145**), the VMCU (**110**) may either direct the reserved MCU **(135, 140, 145)** to notify the participants of the new dial-in number, or if the MCU (**135, 140, 145**) is connected to an ISDN network that has a call forwarding service, the MCU (**135, 140, 145)** may be used to forward the call. If call forwarding is used, the VMCU **(110)** will send a call forward request to the local exchange serving calls to the MCU (**135, 140, 145**). Call forwarding on an ISDN line can be signaled during the call setup, or before the call, by providing a special code to the exchange. The special code identifies the number to which to forward the call. For H.323 conferences, the VMCU (**110**) will register the H.323 conference alias on the gatekeeper (**125**). For H.321 conferences, the VMCU (**110**) will register the H.321 ATM numbers with the ATM (**150**). In the case of an IN (**130**) based solution, the VMCU (**110**) will notify the IN (**130**) of the real destination number associated with the allocated dial-in number.

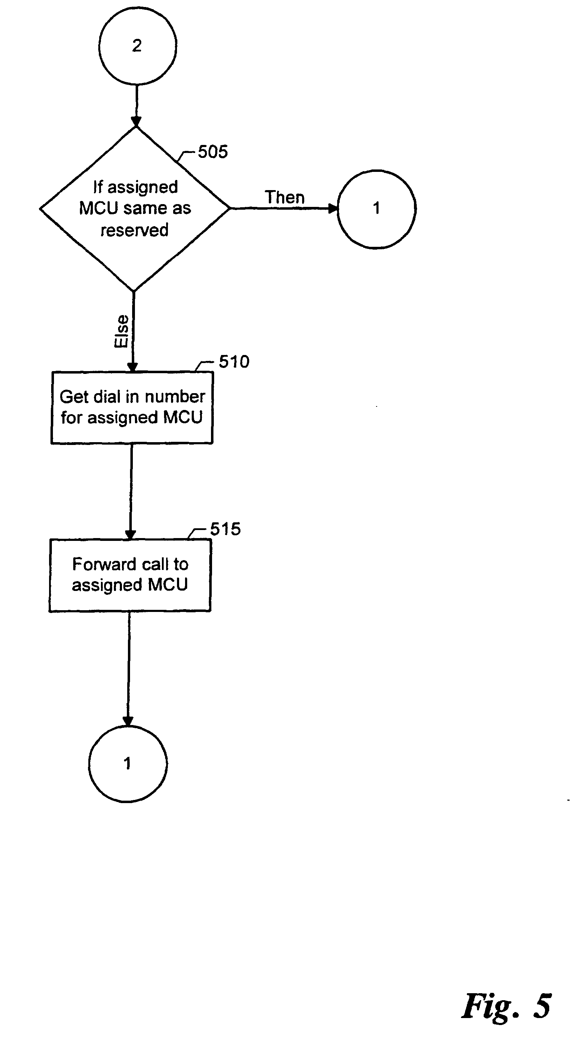

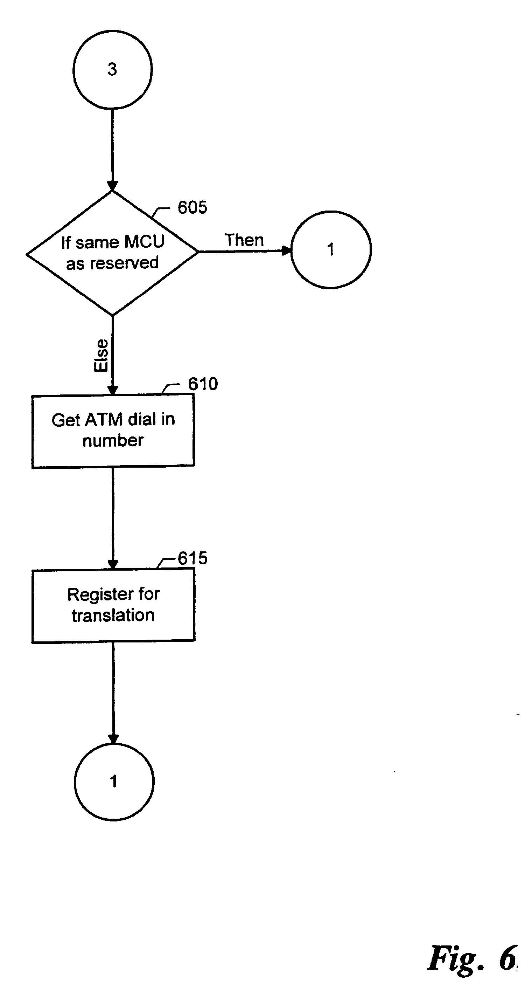

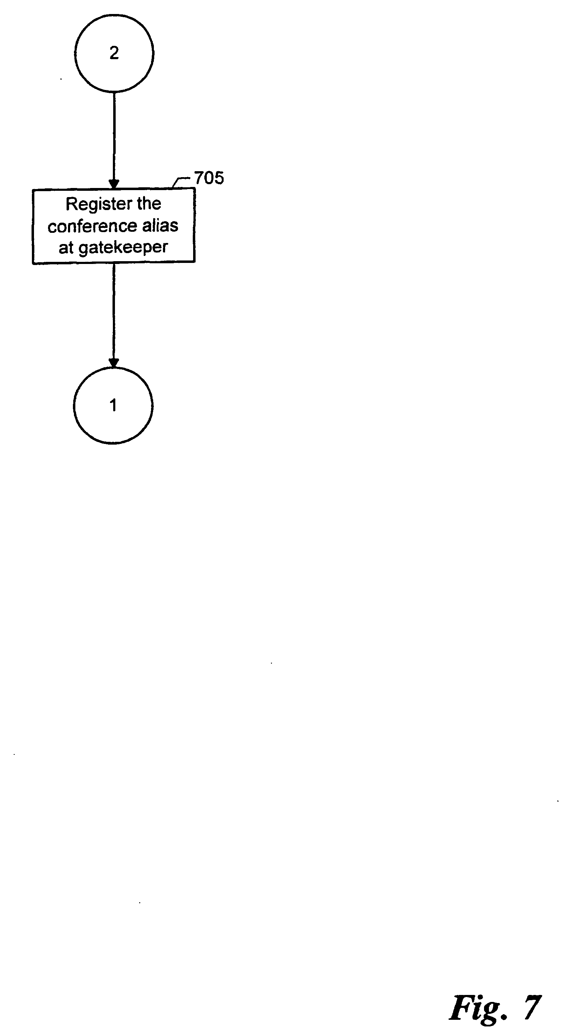

After the conference has been assigned to an MCU (**410**), the VMCU (**110**) will get the first participant for the conference (**415**). If the participant is not a dial-in participant (**420**), the VMCU (**110**) will provide the dial-out number to the assigned MCU to enable the assigned MCU to initiate a call to the participant. The dial-out number is available from the reservation database as recorded during the conference reservation phase. If the participant is a dial-in participant (**420**), the next action of the VMCU (**110**) will depend upon what type of terminal is being used. If the dial-in terminal is an H.320 terminal (**425**), processing continues at step **505** of Fig. 5. If the dial-in terminal is an H.321 terminal (**430**), processing continues at step **605** of Fig. 6. If the dial-in terminal is an H.323 terminal (**435**), processing continues at step **705** of Fig. 7.

In addition to the dial-in and dial-out options described above, the participant may connect to the conference by directly dialing the VMCU (**110**). If the participant dials the VMCU (**110**) directly, the call will either be forwarded to the assigned MCU (**135, 140,145**) as described in Fig. 5, or the VMCU (**110**) will handle communications with the assigned MCU (**135, 140, 145**) through the network connecting the VMCU (**110**) to the assigned MCU (**135,140, 145**). After the first participant is secured for the conference, the VMCU (**110**) will repeat the process for each additional participant.

Fig. 5 is a flow diagram illustrating the steps involved in an exemplary embodiment of the present invention during the forwarding of a dial-in call from an H.320 terminal. After the VMCU (**110**) determines that the participant is a dial-in participant using an H.320 terminal (**175,180,185**), the VMCU (**110**) must determine how the terminal (**175,180,185**) will connect to the desired MCU (**135,140,145**). If the H.320 terminal (**175,180,185**) is currently assigned to the MCU (**135, 140, 145**) reserved for the conference (**505**), then that participant is ready to start the conference and the next participant can be processed. If the H.320 terminal is not assigned to the correct MCU (**135, 140, 145**)(**505**), then the VMCU (**110**) must get the dial-in number (**510**) for the correct MCU. Once the dial-in number is called, the VMCU (**110**) forwards the call to the correct MCU (**135, 140, 145**) (**515**). Additionally, the VMCU (**110**) may handle communications with the assigned MCU (**135,140,145**) through the network connecting the VMCU (**110**) to the assigned MCU (**135,140,145**).

Fig. 6 is a flow diagram illustrating the steps involved in an exemplary embodiment of the present invention in response to a conference initiation from an H.321 terminal. After the VMCU (**110**) determines that the participant is a dial-in participant using an H.321 terminal (**155, 160**), the VMCU (**110**) must determine how the terminal (**155,160**) will connect to the conference. If the H.321 terminal (**155, 160**) is currently assigned to the MCU (**135, 140, 145**) reserved for the conference (**605**), then that participant is ready to start the conference and the next participant can be processed. If the participant is not assigned to the correct MCU (**135,140, 145**)(**605**), then the system must get the ATM dial-in number (**610**). If an ISDN number has been assigned to the conference by the VMCU (**110**), it will be translated to the correct ATM number during call setup in an H.321 terminal (**155,160**) (**615**).

Fig. 7 is a flow diagram illustrating the steps involved in an exemplary embodiment of the present invention during a conference initiation process from an H.323 terminal. After the VMCU (**110**) determines that the participant is a dial-in participant using an H.323 terminal (**190, 195, 198**), the VMCU (**110**) will register the conference alias at the gatekeeper (**705**). Once the alias is registered at the gatekeeper, the H.323 terminal can communicate with the assigned MCU (**135, 140,145**). The Alias assigned by the VMCU (**110**) during the conference scheduling phase will point to one of the preferred MCUs (**135,140,145**) for the conference. The number may optionally be a special number in cases where the system supports IN (**130**) connectivity. The number will be used as an E.164 alias by the H.323 terminals (**190, 195, 198**) to call through a gatekeeper.

### CONCLUSION

The present invention provides the ability to schedule and initiate a conference, or other event, through a VMCU. The VMCU is designed to accept reservations and schedule conferences for a multitude of MCUs. This enables the VMCU to schedule the conferences in an efficient manner and to maximize the number of conferences scheduled at any particular time. The present invention has been described in relation to particular embodiments, which are intended in all respects to be illustrative rather than restrictive. Those skilled in the art will understand that the principles of the present invention may be applied to, and embodied in, various program modules for execution on differing types of computers and/or equipment, operating in differing types of networks, regardless of the application.

## Claims

1. A method for multimedia communication, comprising the steps of:
communicatively interconnecting a plurality of multimedia terminals (155, 160, 175, 180, 185,190,195,198) to a plurality of corresponding multipoint control units (135,140,145), wherein each multimedia terminal is connectable to two or more of said plurality of multipoint control units;
communicatively interconnecting the plurality of corresponding multipoint control units (135, 140,145) to a central control unit (110);
identifying capability factors for each of the plurality of multimedia terminals (155, 160, 175,180, 185,190, 195, 198) and each of the plurality of corresponding multipoint control units (135, 140,145);
responsive to a command to initiate a multimedia communication between at least two of the plurality of multimedia terminals (155, 160,175, 180, 185,190, 195, 198), evaluating the capability factors for each of the at least two multimedia terminals (155, 160,175,180, 185,190, 195,198);
comparing the capability factors for each of the at least two multimedia terminals (155, 160, 175, 180, 185, 190, 195, 198) to the capability factors of the multipoint control units (135, 140,145) communicatively interconnected to the central control unit (110) to determine an optimum assignment of resources for a multimedia interconnection between the at least two participating multimedia terminals (155, 160, 175, 180, 185, 190, 195, 198); and
responsive to the comparing of capability factors, the central control unit (110) assigning the multipoint control unit to be used for the multimedia interconnection of the participating multimedia terminals to one of said plurality of multimedia control units and directing a communicative interconnection between the at least two multimedia terminals (155, 160,175, 180, 185, 190,195, 198) via at least one of the plurality of multipoint control units (135,140, 145).

2. The method of claim 1, wherein the capability factors include identification factors, matching factors, and routing factors.

3. The method of claim 2, wherein the identification factors include information relating to the identity, needs, requirements, and participation authority of the plurality of multimedia terminals (155, 160, 175, 180,185,190,195,198).

4. The method of claim 2, wherein the matching factors include information relating to the capacity and technological orientation of each of the plurality of corresponding multipoint control units (135, 140, 145).

5. The method of claim 2, wherein the routing factors include information relating to the most expeditious route for effecting the communicative interconnection between the at least two multimedia terminals (155, 160, 175, 180, 185, 190, 195, 198) and the plurality of corresponding multipoint control unit (135, 140, or 145).

6. The method of claim 1, further comprising:
allocating conferences on the plurality of multipoint control units (135, 140, 145) such that the number of conferences that can be scheduled on a conference schedule is optimized.

7. The method of claim 6, wherein the conference schedule is optimized by combining conferences on at least one of the plurality of multipoint control units (135,140, or 145) so as to maximize the number of participants on the multipoint control unit (135,140, or 145).

8. The method of claim 1, further comprising:
controlling multipoint control unit participant slots with the central control unit (110).

9. The method of claim 8, wherein the central control unit (110) controls the multipoint control unit participant slots as if the multipoint control unit participant slots were an additional multipoint control unit (135, 140, or 145).

10. The method of claim 8, wherein the multipoint control unit participant slots are participant slots remaining after the at least one of the plurality of multipoint control unit (135, 140, or 145) is optimally scheduled.

11. The method of claim 1, wherein the command to initiate a multimedia communication is issued when the start time for a conference arrives.

12. The method of claim 1, wherein the command to initiate a multimedia communication is issued when a participant requests an impromptu multimedia communication.

13. The method of any of the previous claims, wherein the central control unit (110) is a Virtual Multipoint Control Unit (VMCU).

14. A central control unit (110) for controlling the operation of a plurality of multipoint control units (135, 140, or 145), the multipoint control units (135, 140, 145) being operable to provide conferencing for a plurality of multimedia terminals (155, 160, 175, 180, 185, 190, 195, 198), wherein each multimedia terminal is connectable to two or more of said plurality of multipoint control units, the central control unit (110) comprising:
a multipoint control unit interface (225) for controlling the operation and resource allocation of said plurality of multipoint control units (135, 140, or 145);
wherein, the central control unit (110) schedules conferences by performing the resource allocation in a fashion that determines an optimum assignment of resources for a multimedia interconnection of at least two participating multimedia terminals;
a conference reservation manager (235) for making conference reservations by assigning a particular multipoint control unit (135, 140, 145) from the plurality of multimedia control units to a conference, and
a conference manager (250) for managing a conference by directing participating multimedia terminals to said particular multipoint control unit.

15. The central control unit of claim 14, said conference reservation manager further selecting a multipoint control unit (135, 140, or 145) to engage in said conference, the selected multipoint control unit (135, 140, or 145) being selected from a group of multipoint control units (135,140, 145) consisting of the particular multipoint control unit (135, 140, or 145) and an alternate available multipoint control unit (135, 140, or 145).

16. The central control unit of claim 14, further comprising:
a reporting manager (240) for reporting the status of a conference.

17. The central control unit of claim 14, further comprising:
an event manager (255) for managing the initiation of conferences.

18. The central control unit of claim 14, further comprising:
a conference reservation manager (235) for making conference reservations.

19. The central control unit (110) of claim 14, wherein the conference manager (250) directs the participants to the selected multipoint control unit (135,140, or 145) by providing to the particular multipoint control unit (135,140, or 145) a number to which to forward a call if an alternate available multipoint control unit (135,140, or 145) is selected as the selected multipoint control unit (135,140, or 145).

20. The central control unit of claim 14, further comprising:
a system administration tool (230) for administering the system by directing communication between endpoints in communication with a virtual multipoint control unit (110).

21. The central control unit of claim 14, wherein each of the at least one multipoint control units (135, 140, 145) can support X participant slots in one or more conferences, further comprising:
a resource allocation manager (245) for allocating resources for conferences;
wherein the resources are allocated by assigning conferences to a multipoint control unit (135, 140, or 145) so that optimal use of the at least one multipoint control units (135, 140, 145) can be obtained.

22. The central control unit (110) of claim 21, wherein the resources are allocated among the at least one multipoint control units (135, 140, 145) as follows:
receiving a first request for a first conference, the first conference requiring support for A participants;
receiving a second request for a second conference, the second conference requiring support for B participants;
receiving a third request for a third conference, the third conference requiring support for C participants;
wherein the sum of A and B is greater than X and the sum of B and C is less or equal to X, assigning the first conference to a first multipoint control unit (135,140, or 145) and assigning the second conference and third conference to a second multipoint control unit (135, 140, or 145).

23. The central control unit of claim 21, wherein the resources are allocated among the at least one multipoint control units (135, 140, 145) as follows:
receiving a first request for a first conference, the first conference requiring support for A participants;
receiving a second request for a second conference, the second conference requiring support for B participants;
receiving a third request for a third conference, the third conference requiring support for C participants;
wherein the sum of A and B is greater than X, the sum of A and C is greater than X, and the sum of B and C is greater than X, assigning the first conference to a first multipoint control unit (135,140, or 145), assigning the second conference to a second multipoint control unit (135,140, or 145), and assigning the third conference to a virtual multipoint control unit (110),
wherein the virtual multipoint control unit (110) controls the remaining participant slots on the first and second multipoint control units (135, 140, 145) as an additional multipoint control unit (135,140, or 145).

24. The central control unit according to any of claims 14 to 23, comprising a database (265) for recording conference reservations and participating multimedia terminals.

25. A system for multimedia communication, comprising:
a plurality of multimedia terminals (155, 160, 175,180, 185, 190, 195, 198);
a plurality of multipoint control units (135, 140, 145) in communication with the plurality of multimedia terminals (155, 160, 175,180, 185, 190, 195, 198); and
a central control unit (110) as defined in one of claims 14 to 23.

26. The system of claim 25, wherein at least one of the multimedia terminals (155,160,175,180,185,190, 195,198) is an H.320 terminal (175,180 or 185), an H.323 terminal (190,195, or 198), an H.321 terminal (155 or 160), or a combination of H.320, H.321, and H.323 systems.

27. The system of claim 25, wherein the multimedia terminals (155, 160, 175, 180, 185, 190,195, 198) can communicate over an Asynchronous Transfer Mode (ATM) network (150), over a Local Area Network (LAN) or Internet (120 or 170), over an Integrated Services Digital Network (ISDN), or with terminals (155, 160, 175, 180, 185, 190, 195, 198) of various standards.

28. The system of claim 25, wherein the central control unit (110) in communication with the at least two multipoint control units (135,140, 145) is capable of scheduling and hosting a video conference including terminals (155,160, 175, 180, 185, 190, 195, 198) connected to at least two of the at least two multipoint control units (135, 140, 145).

29. The system of claim 25, wherein the virtual multipoint control unit (110) is one of the plurality of multipoint control units (135, 140, 145).

## Patentansprüche

1. Verfahren zur Multimedia-Kommunikation mit den Schritten:
kommunikatives Verbinden einer Vielzahl von Multimedia-Endgeräten (155, 160, 175, 180, 185, 190, 195, 198) mit einer Vielzahl von entsprechenden Mehrpunkt-Steuereinheiten (135, 140, 145), wobei jedes Multimedia-Endgerät mit zwei oder mehr der Vielzahl von Mehrpunkt-Steuereinheiten verbindbar ist;
kommunikatives Verbinden der Vielzahl von entsprechenden Mehrpunkt-Steuereinheiten (135, 140, 145) mit einer zentralen Steuereinheit (110);
Identifizieren von Fähigkeitsfaktoren für jedes der Vielzahl von Multimedia-Endgeräten (155, 160, 175, 180, 185, 190, 195, 198) und jede der Vielzahl von entsprechenden Mehrpunkt-Steuereinheiten (135, 140, 145);
als Reaktion auf einen Befehl zum Einleiten einer Multimedia-Kommunikation zwischen mindestens zwei der Vielzahl von Multimedia-Endgeräten (155, 160, 175, 180, 185, 190, 195, 198) Auswerten der Fähigkeitsfaktoren für jedes der mindestens zwei Multimedia-Endgeräte (155, 160, 175, 180, 185, 190, 195, 198);
Vergleichen der Fähigkeitsfaktoren für jedes der mindestens zwei Multimedia-Endgeräte (155, 160, 175, 180, 185, 190, 195, 198) mit den Fähigkeitsfaktoren der Mehrpunkt-Steuereinheiten (135, 140, 145), die kommunikativ mit der zentralen Steuereinheit (110) verbunden sind, um eine optimale Zuweisung von Betriebsmitteln für eine Multimedia-Verbindung zwischen den mindestens zwei teilnehmenden Multimedia-Endgeräten (155, 160, 175, 180, 185, 190, 195, 198) zu ermitteln; und
wobei als Reaktion auf das Vergleichen der Fähigkeitsfaktoren die zentrale Steuereinheit (110) die Mehrpunkt-Steuereinheit, die für die Multimedia-Verbindung der teilnehmenden Multimedia-Endgeräte verwendet werden soll, einer der Vielzahl von Multimedia-Steuereinheiten zuweist und eine kommunikative Verbindung zwischen den mindestens zwei Multimedia-Endgeräten (155, 160, 175, 180, 185, 190, 195, 198) über mindestens eine der Vielzahl von Mehrpunkt-Steuereinheiten (135, 140, 145) leitet.

2. Verfahren nach Anspruch 1, wobei die Fähigkeitsfaktoren Identifikationsfaktoren, Abgleichsfaktoren und Leitwegfaktoren umfassen.

3. Verfahren nach Anspruch 2, wobei die Identifikationsfaktoren eine Information hinsichtlich der Identität, Bedürfnisse, Anforderungen und Teilnahmeberechtigung der Vielzahl von Multimedia-Endgeräten (155, 160, 175, 180, 185, 190, 195, 198) umfassen.

4. Verfahren nach Anspruch 2, wobei die Abgleichsfaktoren eine Information hinsichtlich der Kapazität und technologischen Orientierung von jeder der Vielzahl von entsprechenden Mehrpunkt-Steuereinheiten (135, 140, 145) umfassen.

5. Verfahren nach Anspruch 2, wobei die Leitwegfaktoren eine Information hinsichtlich des schnellsten Leitweges zum Bewirken der kommunikativen Verbindung zwischen den mindestens zwei Multimedia-Endgeräten (155, 160, 175, 180, 185, 190, 195, 198) und der Vielzahl von entsprechenden Mehrpunkt-Steuereinheiten (135, 140 oder 145) umfassen.

6. Verfahren nach Anspruch 1, welches ferner umfasst:
Zuweisen von Konferenzen an der Vielzahl von Mehrpunkt-Steuereinheiten (135, 140, 145), so dass die Anzahl von Konferenzen, die in einem Konferenzzeitplan zeitlich geplant werden können, optimiert wird.

7. Verfahren nach Anspruch 6, wobei der Konferenzzeitplan durch Kombinieren von Konferenzen an mindestens einer der Vielzahl von Mehrpunkt-Steuereinheiten (135, 140 oder 145) optimiert wird, um die Anzahl von Teilnehmern an der Mehrpunkt-Steuereinheit (135, 140 oder 145) zu maximieren.

8. Verfahren nach Anspruch 1, welches ferner umfasst:
Steuern von Mehrpunkt-Steuereinheits-Teilnehmerschlitzen mit der zentralen Steuereinheit (110).

9. Verfahren nach Anspruch 8, wobei die zentrale Steuereinheit (110) die Mehrpunkt-Steuereinheits-Teilnehmerschlitze steuert, als ob die Mehrpunkt-Steuereinheits-Teilnehmerschlitze eine zusätzliche Mehrpunkt-Steuereinheit (135, 140 oder 145) wären.

10. Verfahren nach Anspruch 8, wobei die Mehrpunkt-Steuereinheits-Teilnehmerschlitze Teilnehmerschlitze sind, die verbleiben, nachdem die mindestens eine der Vielzahl von Mehrpunkt-Steuereinheiten (135, 140 oder 145) optimal zeitlich geplant wurde.

11. Verfahren nach Anspruch 1, wobei der Befehl zum Einleiten einer Multimedia-Kommunikation ausgegeben wird, wenn die Startzeit für eine Konferenz kommt.

12. Verfahren nach Anspruch 1, wobei der Befehl zum Einleiten einer Multimedia-Kommunikation ausgegeben wird, wenn ein Teilnehmer eine improvisierte Multimedia-Kommunikation anfordert.

13. Verfahren nach einem der vorangehenden Ansprüche, wobei die zentrale Steuereinheit (110) eine virtuelle Mehrpunkt-Steuereinheit (VMCU) ist.

14. Zentrale Steuereinheit (110) zum Steuern des Betriebs einer Vielzahl von Mehrpunkt-Steuereinheiten (135, 140 oder 145), wobei die Mehrpunkt-Steuereinheiten (135, 140, 145) wirksam sind, um eine Konferenz für eine Vielzahl von Multimedia-Endgeräten (155, 160, 175, 180, 185, 190, 195, 198) bereitzustellen, wobei jedes Multimedia-Endgerät mit zwei oder mehr der Vielzahl von Mehrpunkt-Steuereinheiten verbindbar ist, wobei die zentrale Steuereinheit (110) umfasst:
eine Mehrpunkt-Steuereinheits-Schnittstelle (225) zum Steuern des Betriebs und der Betriebsmittelzuweisung der Vielzahl von Mehrpunkt-Steuereinheiten (135, 140 oder 145);
wobei die zentrale Steuereinheit (110) Konferenzen durch Durchführen der Betriebsmittelzuweisung in einer Weise, die eine optimale Zuweisung von Betriebsmitteln für eine Multimedia-Verbindung von mindestens zwei teilnehmenden Multimedia-Endgeräten festlegt, zeitlich plant;
einen Konferenzbelegungsverwalter (235) zum Durchführen von Konferenzbelegungen durch Zuweisen einer speziellen Mehrpunkt-Steuereinheit (135, 140, 145) von der Vielzahl von Multimedia-Steuereinheiten zu einer Konferenz, und
einen Konferenzverwalter (250) zum Verwalten einer Konferenz durch Leiten von teilnehmenden Multimedia-Endgeräten zu der speziellen Mehrpunkt-Steuereinheit.

15. Zentrale Steuereinheit nach Anspruch 14, wobei der Konferenzbelegungsverwalter ferner eine Mehrpunkt-Steuereinheit (135, 140 oder 145) zur Beteiligung an der Konferenz auswählt, wobei die ausgewählte Mehrpunkt-Steuereinheit (135, 140 oder 145) aus einer Gruppe von Mehrpunkt-Steuereinheiten (135, 140, 145) ausgewählt wird, die aus der speziellen Mehrpunkt-Steuereinheit (135, 140 oder 145) und einer alternativen verfügbaren Mehrpunkt-Steuereinheit (135, 140 oder 145) besteht.

16. Zentrale Steuereinheit nach Anspruch 14, welche ferner umfasst:
einen Meldungsverwalter (240) zum Melden des Zustands einer Konferenz.

17. Zentrale Steuereinheit nach Anspruch 14, welche ferner umfasst:
einen Ereignisverwalter (255) zum Verwalten der Einleitung von Konferenzen.

18. Zentrale Steuereinheit nach Anspruch 14, welche ferner umfasst:
einen Konferenzbelegungsverwalter (235) zum Durchführen von Konferenzbelegungen.

19. Zentrale Steuereinheit (110) nach Anspruch 14, wobei der Konferenzverwalter (250) die Teilnehmer zur ausgewählten Mehrpunkt-Steuereinheit (135, 140 oder 145) leitet, indem er zur speziellen Mehrpunkt-Steuereinheit (135, 140 oder 145) eine Nummer liefert, zu der ein Anruf weitergeleitet werden soll, wenn eine alternative verfügbare Mehrpunkt-Steuereinheit (135, 140 oder 145) als ausgewählte Mehrpunkt-Steuereinheit (135, 140 oder 145) ausgewählt wird.

20. Zentrale Steuereinheit nach Anspruch 14, welche ferner umfasst:
ein Systemverwaltungswerkzeug (230) zum Verwalten des Systems durch Leiten der Kommunikation zwischen Endpunkten in Kommunikation mit einer virtuellen Mehrpunkt-Steuereinheit (110).

21. Zentrale Steuereinheit nach Anspruch 14, wobei jede der mindestens einen Mehrpunkt-Steuereinheit (135, 140, 145) X Teilnehmerschlitze in einer oder mehreren Konferenzen unterstützen kann, welche ferner umfasst:
einen Betriebsmittelzuweisungsverwalter (245) zum Zuweisen von Betriebsmitteln für Konferenzen;
wobei die Betriebsmittel durch Zuweisen von Konferenzen zu einer Mehrpunkt-Steuereinheit (135, 140 oder 145) zugewiesen werden, so dass eine optimale Nutzung der mindestens einen Mehrpunkt-Steuereinheit (135, 140, 145) erhalten werden kann.

22. Zentrale Steuereinheit (110) nach Anspruch 21, wobei die Betriebsmittel unter der mindestens einen Mehrpunkt-Steuereinheit (135, 140, 145) folgendermaßen zugewiesen werden:
Empfangen einer ersten Anforderung für eine erste Konferenz, wobei die erste Konferenz eine Unterstützung für A Teilnehmer erfordert;
Empfangen einer zweiten Anforderung für eine zweite Konferenz, wobei die zweite Konferenz eine Unterstützung für B Teilnehmer erfordert;
Empfangen einer dritten Anforderung für eine dritte Konferenz, wobei die dritte Konferenz eine Unterstützung für C Teilnehmer erfordert;
wobei die Summe von A und B größer ist als X und die Summe von B und C geringer als oder gleich X ist, Zuweisen der ersten Konferenz zu einer ersten Mehrpunkt-Steuereinheit (135, 140 oder 145) und Zuweisen der zweiten Konferenz und der dritten Konferenz zu einer zweiten Mehrpunkt-Steuereinheit (135, 140 oder 145).

23. Zentrale Steuereinheit nach Anspruch 21, wobei die Betriebsmittel unter der mindestens einen Mehrpunkt-Steuereinheit (135, 140, 145) folgendermaßen zugewiesen werden:
Empfangen einer ersten Anforderung für eine erste Konferenz, wobei die erste Konferenz eine Unterstützung für A Teilnehmer erfordert;
Empfangen einer zweiten Anforderung für eine zweite Konferenz, wobei die zweite Konferenz eine Unterstützung für B Teilnehmer erfordert;
Empfangen einer dritten Anforderung für eine dritte Konferenz, wobei die dritte Konferenz eine Unterstützung für C Teilnehmer erfordert;
wobei die Summe von A und B größer ist als X, die Summe von A und C größer ist als X und die Summe von B und C größer ist als X, Zuweisen der ersten Konferenz zu einer ersten Mehrpunkt-Steuereinheit (135, 140 oder 145), Zuweisen der zweiten Konferenz zu einer zweiten Mehrpunkt-Steuereinheit (135, 140 oder 145) und Zuweisen der dritten Konferenz zu einer virtuellen Mehrpunkt-Steuereinheit (110), wobei die virtuelle Mehrpunkt-Steuereinheit (110) die restlichen Teilnehmerschlitze an der ersten und der zweiten Mehrpunkt-Steuereinheit (135, 140, 145) als zusätzliche Mehrpunkt-Steuereinheit (135, 140 oder 145) steuert.

24. Zentrale Steuereinheit nach einem der Ansprüche 14 bis 23 mit einer Datenbank (265) zum Aufzeichnen von Konferenzbelegungen und teilnehmenden Multimedia-Endgeräten.

25. System zur Multimedia-Kommunikation mit:
einer Vielzahl von Multimedia-Endgeräten (155, 160, 175, 180, 185, 190, 195, 198);
einer Vielzahl von Mehrpunkt-Steuereinheiten (135, 140, 145) in Kommunikation mit der Vielzahl von Multimedia-Endgeräten (155, 160, 175, 180, 185, 190, 195, 198); und
einer zentralen Steuereinheit (110) nach einem der Ansprüche 14 bis 23.

26. System nach Anspruch 25, wobei mindestens eines der Multimedia-Endgeräte (155, 160, 175, 180, 185, 190, 195, 198) ein H.320-Endgerät (175, 180 oder 185), ein H.323-Endgerät (190, 195 oder 198), ein H.321-Endgerät (155 oder 160) oder eine Kombination von H.320-, H.321- und H.323-Systemen ist.

27. System nach Anspruch 25, wobei die Multimedia-Endgeräte (155, 160, 175, 180, 185, 190, 195, 198) über ein Netzwerk (150) im asynchronen Übertragungsmodus (ATM), über ein lokales Netzwerk (LAN) oder das Internet (120 oder 170), über ein dienstintegriertes Digitalnetz (ISDN) oder mit Endgeräten (155, 160, 175, 180, 185, 190, 195, 198) verschiedener Standards kommunizieren können.

28. System nach Anspruch 25, wobei die zentrale Steuereinheit (110) in Kommunikation mit den mindestens zwei Mehrpunkt-Steuereinheiten (135, 140, 145) in der Lage ist, eine Videokonferenz mit Endgeräten (155, 160, 175, 180, 185, 190, 195, 198), die mit mindestens zwei der mindestens zwei Mehrpunkt-Steuereinheiten (135, 140, 145) verbunden sind, zeitlich zu planen und zu unterstützen.

29. System nach Anspruch 25, wobei die virtuelle Mehrpunkt-Steuereinheit (110) eine der Vielzahl von Mehrpunkt-Steuereinheiten (135, 140, 145) ist.

## Revendications

1. Procédé destiné à une communication multimédia, comprenant les étapes consistant à :
interconnecter en communication une pluralité de terminaux multimédia (155, 160, 175, 180, 185, 190, 195, 198) à une pluralité d'unités de commande multipoint correspondantes (135, 140, 145), où chaque terminal multimédia peut être connecté à deux unités de ladite pluralité d'unités de commande multipoint ou plus,
interconnecter en communication la pluralité d'unités de commande multipoint correspondantes (135, 140, 145) à une unité de commande centrale (110),
identifier des facteurs de capacité pour chaque terminal de la pluralité de terminaux multimédia (155, 160, 175, 180, 185, 190, 195, 198), et chaque unité de la pluralité d'unités de commande multipoint correspondantes (135, 140, 145),
en réponse à une commande pour lancer une communication multimédia entre au moins deux terminaux de la pluralité de terminaux multimédia (155, 160, 175, 180, 185, 190, 195, 198), évaluer les facteurs de capacité pour chaque terminal des au moins deux terminaux multimédia (155, 160, 175, 180, 185, 190, 195, 198),
comparer les facteurs de capacité pour chacun des au moins deux terminaux multimédia (155, 160, 175, 180, 185, 190, 195, 198) aux facteurs de capacité des unités de commande multipoint (135, 140, 145) interconnectées en communication avec l'unité de commande centrale (110) pour déterminer une affectation optimum des ressources pour une interconnexion multimédia entre les au moins deux terminaux multimédia participants (155, 160, 175, 180, 185, 190, 195, 198), et
en réponse à la comparaison des facteurs de capacité, l'unité de commande centrale (110) affecter l'unité de commande multipoint à utiliser pour l'interconnexion multimédia des terminaux multimédia participants à une unité de ladite pluralité d'unités de commande multimédia et piloter une interconnexion de communication entre les au moins deux terminaux multimédia (155, 160, 175, 180, 185, 190, 195, 198)par l'intermédiaire d'au moins une unité de la pluralité d'unités de commande multipoint (135, 140, 145).

2. Procédé selon la revendication 1, dans lequel les facteurs de capacité comprennent des facteurs d'identification, des facteurs d'adaptation et des facteurs d'acheminement.

3. Procédé selon la revendication 2, dans lequel les facteurs d'identification comprennent des informations se rapportant à l'identité, aux besoins, aux exigences et à l'habilité de participation de la pluralité de terminaux multimédia (155, 160, 175, 180, 185, 190, 195, 198).

4. Procédé selon la revendication 2, dans lequel les facteurs d'adaptation comprennent des informations se rapportant à la capacité et à l'orientation technologique de chaque unité de la pluralité d'unités de commande multipoint correspondantes (135, 140, 145).

5. Procédé selon la revendication 2, dans lequel les facteurs d'acheminement comprennent des informations se rapportant à l'itinéraire le plus rapide pour réaliser l'interconnexion de communication entre les au moins deux terminaux multimédia (155, 160, 175, 180, 185, 190, 195, 198) et la pluralité d'unités de commande multipoint correspondantes (135, 140 ou 145).

6. Procédé selon la revendication 1, comprenant en outre :
l'allocation de conférences sur la pluralité d'unités de commande multipoint (135, 140, 145) de sorte que le nombre de conférences qui peuvent être planifiées sur une prévision de conférences soit optimisé.

7. Procédé selon la revendication 6, dans lequel la prévision des conférences est optimisée en combinant des conférences sur au moins une unité de la pluralité d'unités de commande multipoint (135, 140 ou 145) de façon à maximiser le nombre des participants sur l'unité de commande multipoint (135, 140 ou 145).

8. Procédé selon la revendication 1, comprenant en outre :
la commande des créneaux des participants de l'unité de commande multipoint avec l'unité de commande centrale (110).

9. Procédé selon la revendication 8, dans lequel l'unité de commande centrale (110) commande les créneaux des participants de l'unité de commande multipoint comme si les créneaux de participants de l'unité de commande multipoint constituaient une unité de commande multipoint supplémentaire (135, 140 ou 145).

10. Procédé selon la revendication 8, dans lequel les créneaux des participants de l'unité de commande multipoint sont des créneaux de participants restant après qu'au moins une unité de la pluralité d'unités de commande multipoint (135, 140 ou 145) est planifiée de façon optimale.

11. Procédé selon la revendication 1, dans lequel la commande pour lancer une communication multimédia est émise lorsque l'heure de début d'une conférence arrive.

12. Procédé selon la revendication 1, dans lequel la commande pour lancer une communication multimédia est émise lorsqu'un participant demande une communication multimédia improvisée.

13. Procédé selon l'une quelconque des revendications précédents, dans lequel l'unité de commande centrale (110) est une unité de commande multipoint virtuelle (VMCU).

14. Unité de commande centrale (110) destinée à commander le fonctionnement d'une pluralité d'unités de commande multipoint (135, 140 ou 145), les unités de commande multipoint (135, 140, 145) pouvant être mises en oeuvre pour permettre une mise en conférence d'une pluralité de terminaux multimédia (155, 160, 175, 180, 185, 190, 195, 198), où chaque terminal multimédia peut être connecté à deux unités de ladite pluralité d'unités de commande multipoint ou plus, l'unité de commande centrale (110) comprenant :
une interface d'unité de commande multipoint (225) destinée à commander le fonctionnement et l'allocation des ressources de ladite pluralité d'unités de commande multipoint (135, 140 ou 145),
dans laquelle, l'unité de commande centrale (110) planifie des conférences en exécutant l'allocation de ressources d'une manière qui détermine une affectation optimum des ressources pour une interconnexion multimédia d'au moins deux terminaux multimédia participants,
un gestionnaire de réservation de conférence (235) destiné à effectuer des réservations de conférences en affectant une unité de commande multipoint particulière (135, 140, 145) parmi la pluralité d'unités de commande multimédia à une conférence, et
un gestionnaire de conférence (250) destiné à gérer une conférence en dirigeant des terminaux multimédia participants vers ladite unité de commande multipoint particulière.

15. Unité de commande centrale selon la revendication 14, ledit gestionnaire de réservation de conférence sélectionnant en outre une unité de commande multipoint (135, 140 ou 145) à introduire dans ladite conférence, l'unité de commande multipoint sélectionnée (135, 140 ou 145) étant sélectionnée parmi un groupe d'unités de commande multipoint (135, 140, 145) constitué de l'unité de commande multipoint particulière (135, 140 ou 145) et d'une unité de commande multipoint disponible de réserve (135, 140 ou 145).

16. Unité de commande centrale selon la revendication 14, comprenant en outre :
un gestionnaire de compte-rendu (240) destiné à signaler l'état d'une conférence.

17. Unité de commande centrale selon la revendication 14, comprenant en outre :
un gestionnaire d'événements (255) destiné à gérer le lancement des conférences.

18. Unité de commande centrale selon la revendication 14, comprenant en outre :
un gestionnaire de réservation de conférence (235) destiné à effectuer les réservations de conférences.

19. Unité de commande centrale (110) selon la revendication 14, dans laquelle le gestionnaire de conférence (250) dirige les participants vers l'unité de commande multipoint sélectionnée (135, 140 ou 145) en fournissant à l'unité de commande multipoint particulière (135, 140 ou 145) un numéro vers lequel retransmettre un appel si une unité de commande multipoint disponible de réserve (135, 140 ou 145) est sélectionnée en tant qu'unité de commande multipoint sélectionnée (135, 140 ou 145).

20. Unité de commande centrale selon la revendication 14, comprenant en outre :
un outil d'administration de système (230) destiné à administrer le système en pilotant une communication entre les points d'extrémité en communication avec une unité de commande multipoint virtuelle (110).

21. Unité de commande centrale selon la revendication 14, dans laquelle chaque unité des au moins une unités de commande multipoint (135, 140, 145) peut accepter X créneaux de participants dans une ou plusieurs conférences, comprenant en outre :
un gestionnaire d'allocation de ressources (245) destiné à allouer des ressources pour les conférences,
dans lequel les ressources sont allouées en affectant des conférences à une unité de commande multipoint (135, 140 ou 145) de sorte qu'une utilisation optimale des au moins une unités de commande multipoint (135, 140, 145) puisse être obtenue.

22. Unité de commande centrale (110) selon la revendication 21, dans laquelle les ressources sont allouées parmi les au moins une unités de commande multipoint (135, 140, 145) comme suit :
recevoir une première demande pour une première conférence, la première conférence requérant d'accepter A participants,
recevoir une seconde demande pour une seconde conférence, la seconde conférence requérant d'accepter B participants,
recevoir une troisième demande pour une troisième conférence, la troisième conférence requérant d'accepter C participants,
où la somme de A et B est supérieure à X et la somme de B et C est inférieure ou égale à X, affecter la première conférence à une première unité de commande multipoint (135, 140 ou 145) et affecter la seconde conférence et la troisième conférence à une seconde unité de commande multipoint (135, 140 ou 145).

23. Unité de commande centrale selon la revendication 21, dans laquelle les ressources sont allouées parmi les au moins une unités de commande multipoint (135, 140, 145) comme suit :
recevoir une première demande pour une première conférence, la première conférence requérant d'accepter A participants,
recevoir une seconde demande pour une seconde conférence, la seconde conférence requérant d'accepter B participants,
recevoir une troisième demande pour une troisième conférence, la troisième conférence requérant d'accepter C participants,
où la somme de A et B est supérieure à X, la somme de A et C est supérieure à X, et la somme de B et C est supérieure à X, affecter la première conférence à une première unité de commande multipoint (135, 140 ou 145), affecter la seconde conférence à une seconde unité de commande multipoint (135, 140 ou 145), et affecter la troisième conférence à une unité de commande multipoint virtuelle (110), où l'unité de commande multipoint virtuelle (110) commande les créneaux des participants restant sur les première et seconde unités de commande multipoint (135, 140, 145) comme une unité de commande multipoint supplémentaire (135, 140 ou 145).

24. Unité de commande centrale selon l'une quelconque des revendications 14 à 23, comprenant une base de données (265) destinée à enregistrer des réservations de conférences et des terminaux multimédia participants.

25. Système destiné à une communications multimédia, comprenant :
une pluralité de terminaux multimédia (155, 160, 175, 180, 185, 190, 195, 198),
une pluralité d'unités de commande multipoint (135, 140, 145) en communication avec la pluralité de terminaux multimédia (155, 160, 175, 180, 185, 190, 195, 198), et
une unité de commande centrale (110) selon l'une des revendications 14 à 23.

26. Système selon la revendication 25, dans lequel au moins l'un des terminaux multimédia (155, 160, 175, 180, 185, 190, 195, 198) est un terminal à protocole H.320 (175, 180 ou 185), un terminal à protocole H.320 (190, 195 ou 198), un terminal à protocole H.321 (155 ou 160), ou bien une combinaison de systèmes à protocoles H.323, H.321 et H.323.

27. Système selon la revendication 25, dans lequel les terminaux multimédia (155, 160, 175, 180, 185, 190, 195, 198) peuvent communiquer sur un réseau (150 )à mode de transfert asynchrone (ATM), sur un réseau local (LAN) ou un réseau Internet (120 ou 170), sur un réseau numérique à intégration de services (RNIS), ou bien avec des terminaux (155, 160, 175, 180, 185, 190, 195, 198) à divers standards.

28. Système selon la revendication 25, dans lequel l'unité de commande centrale (110) en communication avec au moins deux unités de commande multipoint (135, 140, 145) est capable de planifier et de prendre en compte une conférence vidéo comprenant des terminaux (155, 160, 175, 180, 185, 190, 195, 198) reliés à au moins deux unités des au moins deux unités de commande multipoint (135, 140, 145).

29. Système selon la revendication 25, dans lequel l'unité de commande multipoint virtuelle (110) est une unité parmi la pluralité d'unités de commande multipoint (135, 140, 145).
